# EUROPEAN PATENT SPECIFICATION

(11) **EP 1 961 547 B1**
(45) Date of publication and mention of the grant of the patent: **03.06.2009**
(21) Application number: 08002455.7
(22) Date of filing: 11.02.2008
(51) Int. Cl.: B29C 45/16, B29C 45/14, B67B 7/04, B25G 1/00

(54) **Production method for corkscrew bottle opener**
Herstellungsverfahren für einen Korkenzieherflaschenöffner
Procédé de production pour tire-bouchon

(30) Priority: 26.02.2007 IT UD20070042
(43) Date of publication of application: 27.08.2008
(73) Proprietor: Partizio, Cesare, 33085 Maniago PN (IT); Patrizio, Alessandra, 33085 Maniago PN (IT)
(72) Inventor: Partizio, Cesare, 33085 Maniago PN (IT); Patrizio, Alessandra, 33085 Maniago PN (IT)
(74) Representative: D'Agostini, Giovanni

(56) References cited:
- FR-A- 2 754 204
- IT-A1- PN 970 025
- IT-A1- PN 980 068
- US-A- 5 839 163

## Description

### Object

This invention is a method of production of corkscrew and respective pocket corkscrew, whose characteristics correspond to the precharacterizing part of the main claim.

### Application field

Application field is substantially oriented to tools with spiral screw or helicoidal worm to extract bottle caps, being both corks-, or synthetic caps, from bottle necks.

### State of the art

At present many such pocket corkscrews are known.
Generally, they have a handle with two hinged levers, one at the end of the handle and one adjacent to it, the first including bearing prongs for propping at the neck of the bottle as a strut and a more internal one including a gimlet, or rather, said worm or helicoidal screw, to penetrate the cork, in order to lever on the handle in order to extract the cork itself.

The handle is generally manufactured with a metal core structure, substantially with at least one "U" shaped section in the hinging zones of the said two levers and where said metal core is externally covered with a plastic material, the plastic material covering being also joinable to the core by means of rivets or screws or other means.

Document IT PN 970 025 A1 discloses a method of manufacturing a corkscrew in accordance with the preamble of claim 1.

### Problems and drawbacks of the state of the art

The problems and drawbacks of the state of the art refer substantially to the fact that, generally, the handle's plastic material covering is slippery, therefore the corkscrew could easily slip from the hands, however its shape not providing a sufficiently effective and efficient grip.

Furthermore, said propping lever has been object of a large variety of solutions to allow the variation of the support base, also using more levers e.g. similar two-lever solutions in the name of the same applicant.

### The invention's aim

The invention's aim is to solve the above-mentioned problems and drawbacks and furthermore, without additional costs and without reducing the reliability:
- to improve the functionality and the performance;
- to increase efficiency;
- ensure a safe holding of the plastic material(s) on the respective handle's shape.
   In short, the problem to be solved is the further simplifying of the respective propping levering at the bottle neck.

### Further tasks

Furthermore, said tools have also a hollow for hooking a crown cap in order to remove it. This invention also aims to improve the solution of said function.
Furthermore, said tools provide on the back side an openable penknife to engrave and/or cut the plastic or soft metal covering (Eg. lead) which normally covers the bottle neck. The invention also aims to find a better arrangement for said cutting and/or engraving device and to facilitate the opening of said penknife.
An additional problem to avoid is to avoid the risk of disjunction conditions between the two moulded or co-moulded plastic materials around a metal core, as handle of the corkscrew.

### Solution of the problem and identification of the features of the invention

The problem is solved by the characteristics of the main claim.

### Advantages

In this way, the advantage of substantially improving the functional character and quality of the corkscrew is obtained.

### Description of the preferential solution

In order to provide a better understanding, the invention is described in its preferential solution with the help of the attached illustrations, where:

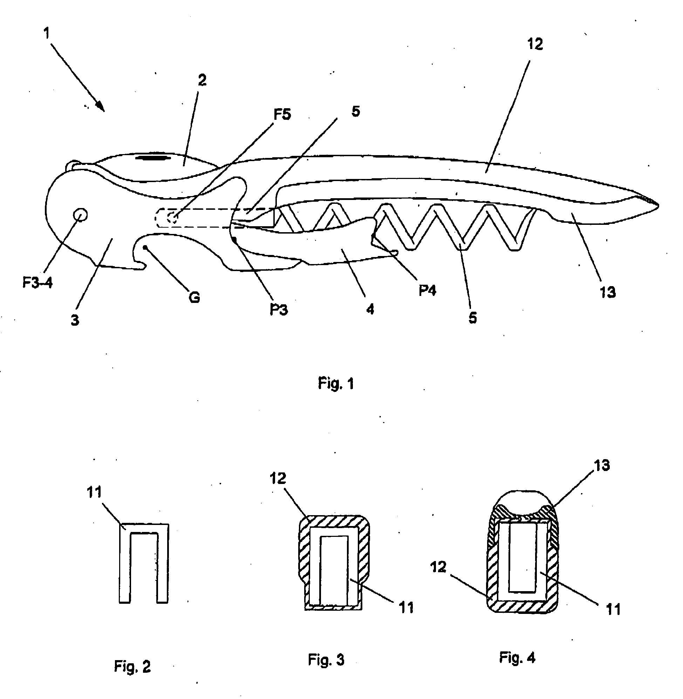

- Fig.1. is the side view of the corkscrew according to this invention with all its tools closed into the core, its opening clearly being deducible and known in the features of these corkscrews, by means of a 90° rotation first of the first propping lever (3) with respective prop P3 and then of the second propping support lever (4) with the respective propping support P4, both on the same pivot (F3-4),
- Fig.2. is a section view in one of the positions of the metal core of the handle,
- Fig.3. is the view of same section as Fig.2 with the first dorsal covering applied by injection of a first type of plastic material and
- Fig.4. is the view of same section as the previous figure, rotated 180°, and in which a second layer of softer, non-slip plastic material has been applied, from the internal side of the extraction tools, or rather, from the side where the fingers grip, improving the functionality according to the invention.

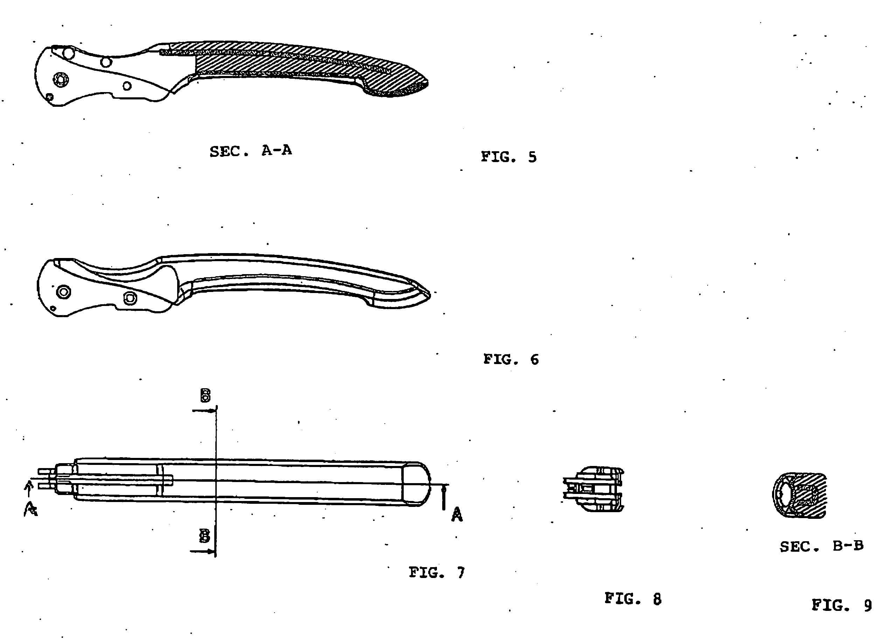

- Figures 5, 6, 7 show the view of the front and dorsal section of the handle respectively, while the
- Figures. 8 and 9 show the head views (or view from the left) and section view of the same handle.

### Detailed description of the invention in relation to the figures

According to the figures, it can be seen that the dorsal engraving and cutting penknife (2) is also hinged on the same pivot (F3-4) as the two propping levers which for the purpose have at least one "U" shaped section in the hinging zones recessed one inside the other and the first external one is shorter than the second internal one (4), so being usable first one, then the other one, in order to complete the extraction of the cap, if not extracted with the help of the first, or anyhow in another way as needed.
On the outside of the first one, conveniently a hooking groove is obtained to open bottles with crown caps according to known technique.

As can be noticed, the handle is extremely thin, or rather fusiform and made of two plastic materials, one hard dorsal (12) and one soft internal (13), the second being adhered to the first one during the following moulding step and obviously from the opposite side, encapsulating the metal core (11).

In this way, a maximum performance tool is obtained and, above all, a handle with decisively higher mechanical and kinematic resistance than current solutions is obtained.

Advantageously, the injected plastic material on the dorsal side of the corkscrew is "ABS" (12) and on the opposite side is a rubbery material, advantageously "TPE" (13).
The new corkscrew's moulding process consists of two parallel phases:
1- the first concerns the moulding of the plastic support that overmolds the steel core of the corkscrew under discussion;
2- the second concerns the thermoplastic rubber's overmolding onto the plastic material support previously created.
   Both sequences are in parallel, i.e. they are obtained by means of rotation of the movable part of the mould. It opens with consequent rotation of the movable part, evacuation of the finished piece and at the same time loading of the steel core with consequent closing of the mould.

### Covering process

The overmolding process with co-moulding of the base material (ABS), the covering material (TPE) and the metal core, happening in direct closed cycle, allows an optimal chemical adhesion, which is more difficultly achieved in case of the subsequent moulding (to a cold piece) also due to the always different behaviour of the base material's shrinking after cooling due to the metal core's incorporation. This is because the surface of the base material being actually hot, at molecular level the surface offers a dilatation of the molecules themselves allowing an optimal mutual penetration of the molecules of the upper material (TPE), obtaining the socalled "self bounding" between the three materials. This, in any case, can be obtained even if not in direct closed cycle, however needing a greater care and experimentation (dedicated to the morphology and the characteristics of the piece under discussion) in the formulation of the TPE material, made even more difficult by the co-moulding with a metal part, keeping it difficult to obtain optimal results, constant in the course of time.

Given the complex morphology of the piece due to the thin thicknesses, the essential aesthetic characteristics and the need for an absolute clamping between the three materials, this technology has supplied optimal results in the finished piece, also avoiding the danger of disjunction between the respective materials, the core as well as between the two plastic materials which substantially form the metal core's encapsulation.

## Claims

1. Method for producing a corkscrew for bottles of the type switching inside the handle, of the type involving a handle with a plurality of tools, having a metal handle core (11) covered with two pressure injectable plastic materials,
**characterised in that**:
a) first, a first dorsal plastic material covering is injected on said metal core of the handle (11) at the temperature required to melt said plastic material (12) and
b) then, at a temperature not lower than 45-50°C, a second, softer elastic material (13) is injected on the internal side of the handle opposite the first dorsal plastic material covering which completes the covering of said metal core of the handle (11) and conjoins to the first (12) by thermo welding with the help of the pre-existing temperature of the first one whereby the pre-existing temperature is 55-60°C.

## Patentansprüche

1. Verfahren zur Herstellung eines Flügelkorkenziehers, mit einem Griff mit einer Anzahl von Werkzeugen, der einen Metallgriffkern (11) aufweist, der mit zwei unter Druck einspritzbaren Kunststoffmaterialien bedeckt ist, **gekennzeichnet dadurch, dass:**
a) zuerst eine erste rückseitige Kunststoffdeckschicht auf den Metallkern des Griffs (11) bei der erforderlichen Temperatur gespritzt wird, um den Kunststoff (12) zu schmelzen, und
b) dann, bei einer Temperatur nicht unter 45-50°C, ein zweiter, weicherer Kunststoff (13) an der Innenseite des Griffes gegenüber der ersten rückseitigen Kunststoffdeckschicht eingespritzt wird, was die Bedeckung des Metallkerns des Griffs (11) vervollständigt, und man verbindet ihn mit ersterer (12) durch Thermoschweißen mit Hilfe der bestehenden Temperatur des ersten, wobei die bestehende Temperatur 55-60° C ist.

## Revendications

1. Méthode pour la production d'un tire-bouchons à leviers pour des bouteilles, du type contenant une poignée avec une pluralité d'outils, ayant une âme de poignée métallique (11) recouverte par deux matériaux plastiques injectables sous pression,
**caractérisée en ce que** :
a) tout d'abord, un premier revêtement postérieur en matière plastique est injecté sur ladite âme métallique de la poignée (11) à la température nécessaire pour fondre ladite matière plastique (12) et
b) ensuite, à une température non inférieure à 45-50°C, une deuxième matière plastique plus molle (13) est injectée sur le côté interne de la poignée en face du premier revêtement postérieur en matière plastique, ce qui complète le revêtement de ladite âme métallique de la poignée (11), et on l'associe à la première (12) par thermosoudage grâce à la température préexistante de la première, de manière telle que la température préexistante soit de 55-60° C.
